# EUROPEAN PATENT APPLICATION

(11) **EP 4 679 930 A1**
(43) Date of publication of application: **14.01.2026**
(21) Application number: 23933003.8
(22) Date of filing: 12.04.2023
(51) Int. Cl.: H04W 76/15, H04W 84/12

(54) **TERMINAL DEVICE, SHARING ACCESS POINT, SHARED ACCESS POINT, AND COMMUNICATION METHOD**

(71) Applicant: NTT, Inc., Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/014920
(87) International publication number: WO 2024/214227

(57) **Abstract**

A terminal apparatus is a terminal apparatus including a sharing access point, a plurality of shared access points, and a terminal apparatus. The terminal apparatus includes a plurality of wireless signal processing units and a control unit. The plurality of wireless signal processing units respectively transmits wireless signals using different channels. The control unit controls connection destinations of the plurality of wireless signal processing units. Each wireless signal processing unit establishes a wireless link with each shared access point. The control unit controls the connection destination of each wireless signal processing unit by enabling up to one of wireless links with the respective shared access points for each wireless signal processing unit and disabling the other wireless links on a basis of a notification from the sharing access point.

## Description

### Technical Field

An embodiment relates to a terminal apparatus, a sharing access point, a shared access point, and a communication method.

### Background Art

A wireless local area network (LAN) is known as a system that wirelessly connects an access point (AP) and a terminal. The wireless LAN allows the terminal located within a communicable area of the AP to access a network via the AP.

### Citation List

### Non Patent Literature

Non Patent Literature 1: IEEE802.11, "association/reassociation", P264-265, 2020

### Summary of Invention

### Technical Problem

Switching of the access point wirelessly connected to the terminal is desirably performed without causing instantaneous interruption.

The present embodiment has been made in view of the above circumstances, and an object thereof is to provide a wireless communication environment in which AP switching is performed without causing instantaneous interruption.

### Solution to Problem

A terminal apparatus according to an aspect is a terminal apparatus including a sharing access point, a plurality of shared access points, and a terminal apparatus. The terminal apparatus includes a plurality of wireless signal processing units and a control unit. The plurality of wireless signal processing units respectively transmits wireless signals using different channels. The control unit controls connection destinations of the plurality of wireless signal processing units. Each wireless signal processing unit establishes a wireless link with each shared access point. The control unit controls the connection destination of each wireless signal processing unit by enabling up to one of wireless links with the respective shared access points for each wireless signal processing unit and disabling the other wireless links on a basis of a notification from the sharing access point.

### Advantageous Effects of Invention

According to the embodiment, it is possible to provide a wireless communication environment in which AP switching is performed without causing instantaneous interruption.

### Brief Description of Drawings

Fig. 1 is a block diagram illustrating an example of a configuration of a communication system according to an embodiment.
Fig. 2 is a block diagram illustrating an example of a hardware configuration of a sharing AP according to the embodiment.
Fig. 3 is a block diagram illustrating an example of a hardware configuration of a shared AP according to the embodiment.
Fig. 4 is a block diagram illustrating an example of a hardware configuration of a terminal according to the embodiment.
Fig. 5 is a block diagram illustrating an example of a functional configuration of the sharing AP according to the embodiment.
Fig. 6 is a table illustrating an example of a data structure of multi-AP management information stored in the sharing AP according to the embodiment.
Fig. 7 is a table illustrating an example of a data structure of terminal management information stored in the sharing AP according to the embodiment.
Fig. 8 is a diagram illustrating an example of an association notification generated in the sharing AP.
Fig. 9 is a block diagram illustrating an example of a functional configuration of the shared AP according to the embodiment.
Fig. 10 is a diagram illustrating an example of a beacon frame generated in the shared AP.
Fig. 11 is a table illustrating an example of a data structure of link management information stored in the shared AP according to the embodiment.
Fig. 12 is a block diagram illustrating an example of a functional configuration of the terminal according to the embodiment.
Fig. 13 is a table illustrating an example of a data structure of the link management information stored in the terminal according to the embodiment.
Fig. 14 is a sequence diagram illustrating an example of processing of communication based on multi-AP connection in the communication system according to the embodiment.
Fig. 15 is a flowchart illustrating an example of determination processing subsequent to association processing.

### Description of Embodiments

Hereinafter, an embodiment will be described with reference to the drawings. Note that in the following description, components having the same functions and configurations will be denoted by common reference signs.

### 1. Embodiment

### 1.1 Configuration

### 1.1.1 Communication System

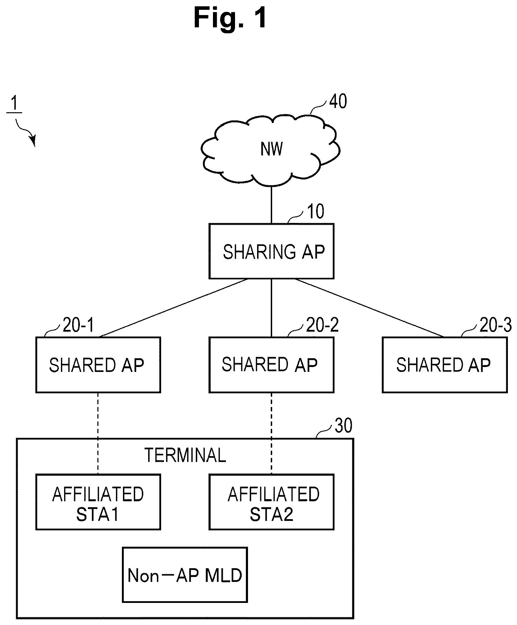

Fig. 1 is a block diagram illustrating an example of a configuration of a communication system according to an embodiment. As illustrated in Fig. 1, a communication system 1 includes a sharing AP 10, shared APs 20-1, 20-2, and 20-3, and a terminal 30. The sharing AP 10 is connected to a network 40.

The sharing AP 10 is, for example, an access point (AP) of a wireless LAN. The sharing AP 10 is configured to perform wired communication or wireless communication with a server (not illustrated) on the network 40. The sharing AP 10 is configured to wirelessly communicate with each of the shared APs 20-1, 20-2, and 20-3.

Each of the shared APs 20-1, 20-2, and 20-3 is, for example, an access point (AP) of the wireless LAN. The shared APs 20-1, 20-2, and 20-3 are installed at positions physically separated from one another. Communicable areas of the shared APs 20-1, 20-2, and 20-3 may have an overlapping area. Each of the shared APs 20-1, 20-2, and 20-3 is configured to wirelessly communicate with the terminal 30. Communication between each of the shared APs 20-1, 20-2, and 20-3 and the terminal 30 is compliant with, for example, the IEEE 802.11 standard. Note that the shared APs 20-1, 20-2, and 20-3 have configurations equivalent to one another. Hereinafter, the shared APs 20-1, 20-2, and 20-3 may be described as shared AP(s) 20 unless otherwise especially distinguished.

The terminal 30 is a wireless terminal such as a smartphone and a personal computer (PC). Here, in Fig. 1, it is assumed that the terminal 30 is located within the communicable area of the shared APs 20-1 and 20-2 and is not located within the communicable area of the shared AP 20-3. The terminal 30 is configured to communicate with a server on the network 40 by communicating with the sharing AP 10 via at least one shared AP 20 of the shared AP 20-1, 20-2, or 20-3. That is, it can be said that the terminal 30 and the sharing AP 10 are wirelessly connected via at least one shared AP 20 of the shared AP 20-1, 20-2, or 20-3. Hereinafter, such a wireless connection method between the terminal 30 and the sharing AP 10 is also referred to as a multi-AP connection method.

Further, the terminal 30 is a wireless terminal compatible with multi-link communication that performs communication using two or more channels. For example, the terminal 30 includes a non-AP MLD, and an affiliated STA 1 and an affiliated STA 2. The non-AP MLD is a multi-link device (MLD) on the side of the terminal 30 that manages a link state of each of the subordinate affiliated STAs 1 and 2. The non-AP MLD also performs processing for establishing a wireless link with the sharing AP 10 in a multi-AP connection method.

In the multi-AP connection method, a wireless link via the shared AP 20-1, a wireless link via the shared AP 20-2, and a wireless link via the shared AP 20-3 are established between an AP MLD of the sharing AP 10 and the non-AP MLD of the terminal 30. In other words, the shared APs 20-1, 20-2, and 20-3 are candidates for a transit destination in data exchange between the sharing AP 10 and the terminal 30. Then, each of the affiliated STA 1 and the affiliated STA 2 of the terminal 30 selects one wireless link among the established wireless links and executes data exchange. The example of Fig. 1 illustrates a case where the sharing AP 10 and the non-AP MLD of the terminal 30 exchange data using the wireless link between the affiliated STA 1 and the shared AP 20-1 and the wireless link between the affiliated STA 2 and the shared AP 20-2. Note that, in the following description, an identifier of the affiliated STA 1 may be described as affiliated STA #1, and an identifier of the affiliated STA 2 may be described as affiliated STA #2.

Note that, in the present specification, the shared APs 20-1, 20-2, and 20-3 are also referred to as "access points" belonging to the sharing AP 10 in the multi-AP connection method.

The sharing AP 10, the shared APs 20-1, 20-2, and 20-3, and the terminal 30 have, for example, a wireless communication function based on an open systems interconnection (OSI) reference model. In the OSI reference model, the wireless communication function is divided into seven layers (a first layer: a physical layer, a second layer: a data link layer, a third layer: a network layer, a fourth layer: a transport layer, a fifth layer: a session layer, a sixth layer: a presentation layer, and a seventh layer: an application layer). The data link layer includes a logical link control (LLC) sublayer and a media access control (MAC) sublayer.

### 1.1.2. Hardware Configuration

Next, hardware configurations of the access point and the terminal in the communication system according to the embodiment will be described.

### 1.1.2.1 Hardware Configuration of Sharing AP

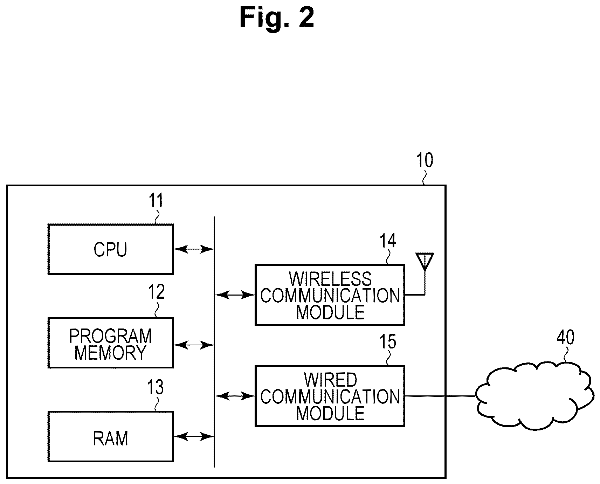

Fig. 2 is a block diagram illustrating an example of a hardware configuration of the sharing AP according to the embodiment. As illustrated in Fig. 2, the sharing AP 10 includes, for example, a central processing unit (CPU) 11, read only memory (ROM) 12, random access memory (RAM) 13, a wireless communication module 14, and a wired communication module 15.

The CPU 11 is a processing circuit that controls the entire operation of the sharing AP 10. The ROM 12 is a nonvolatile semiconductor memory, for example. The ROM 12 stores a program for controlling the sharing AP 10, and data. The RAM 13 is, for example, a volatile semiconductor memory. The RAM 13 is used as a working area of the CPU 11. The wireless communication module 14 is a circuit used to transmit and receive data by a wireless signal. The wireless communication module 14 is connected to an antenna. The wired communication module 15 is a circuit used to transmit and receive data by a wired signal. The wireless communication module 14 can be connected to the shared APs 20-1, 20-2, and 20-3. The wired communication module 15 is connected to the network 40.

### 1.1.2.2 Hardware Configuration of Shared AP

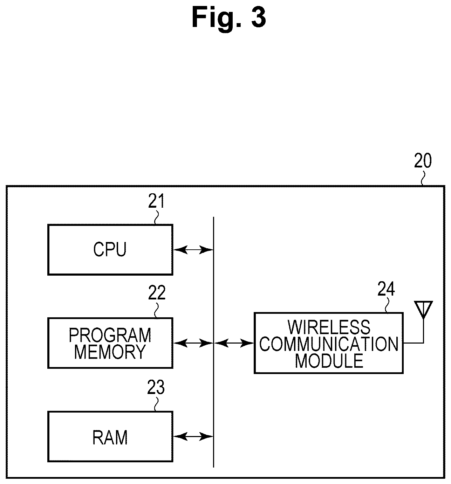

Fig. 3 is a block diagram illustrating an example of a hardware configuration of the shared AP according to the embodiment. As illustrated in Fig. 3, the shared AP 20 includes, for example, a CPU 21, a ROM 22, a RAM 23, and a wireless communication module 24.

The CPU 21 is a processing circuit that controls an entire operation of the shared AP 20. The ROM 22 is a nonvolatile semiconductor memory, for example. The ROM 22 stores a program for controlling the shared AP 20, and data. The RAM 23 is, for example, a volatile semiconductor memory. The RAM 23 is used as a working area of the CPU 21. The wireless communication module 24 is a circuit used to transmit and receive data by a wireless signal. The wireless communication module 24 is connected with an antenna. The wireless communication module 24 can be connected to the sharing AP 10 and the terminal 30.

### 1.1.2.3 Hardware Configuration of Terminal

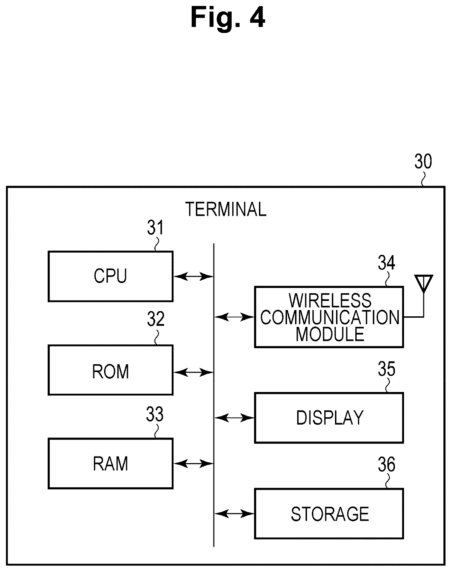

Fig. 4 is a block diagram illustrating an example of a hardware configuration of the terminal according to the embodiment. As illustrated in Fig. 4, the terminal 30 includes, for example, a CPU 31, a ROM 32, a RAM 33, a wireless communication module 34, a display 35, and a storage 36.

The CPU 31 is a processing circuit that controls an entire operation of the terminal 30. The ROM 32 is a nonvolatile semiconductor memory, for example. The ROM 32 stores a program for controlling the terminal 30, and data. The RAM 33 is, for example, a volatile semiconductor memory. The RAM 33 is used as a working area of the CPU 31. The wireless communication module 34 is a circuit used to transmit and receive data by a wireless signal. The wireless communication module 34 is connected with an antenna. The display 35 is, for example, a liquid crystal display (LCD) or an electro luminescence (EL) display. The display 35 displays a graphical user interface (GUI) corresponding to application software, or the like. The storage 36 is a nonvolatile storage device. The storage 36 stores system software of the terminal 30, and the like.

### 1.1.3 Functional Configuration

Next, functional configurations of the access point and the terminal in the communication system according to the embodiment will be described.

### 1.1.3.1 Functional Configuration of Sharing AP

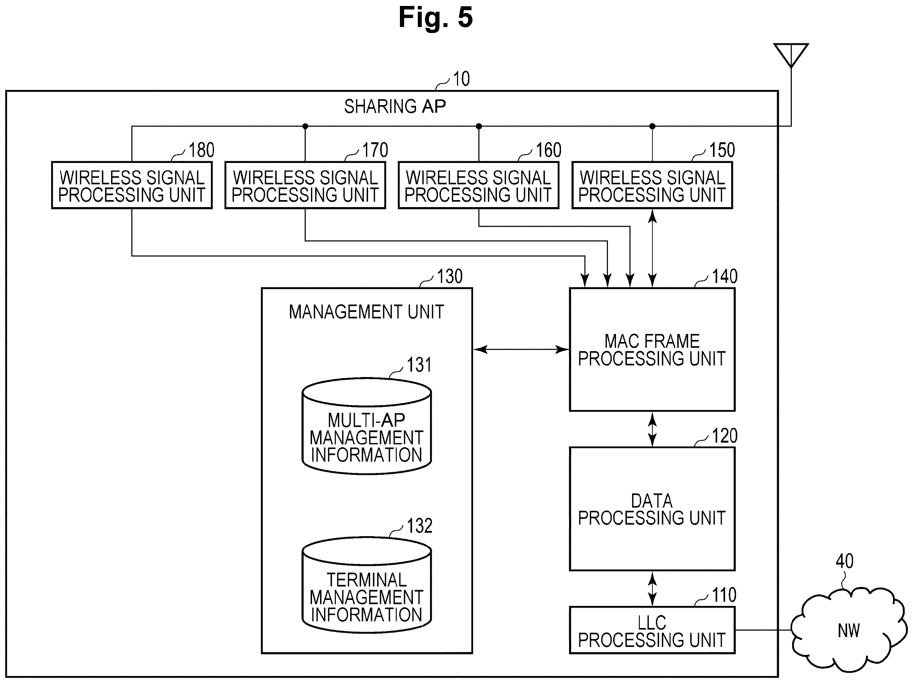

Fig. 5 is a block diagram illustrating an example of a functional configuration of the sharing AP according to the embodiment. The sharing AP 10 functions as a computer including an LLC processing unit 110, a data processing unit 120, a management unit 130, a MAC frame processing unit 140, and wireless signal processing units 150, 160, 170, and 180. The LLC processing unit 110 is a functional block that executes processing corresponding to the LLC sublayer of the second layer and the third layer to the seventh layer. The data processing unit 120, the management unit 130, and the MAC frame processing unit 140 are functional blocks that perform processing corresponding to the MAC sublayer of the second layer. The wireless signal processing units 150, 160, 170, and 180 are functional blocks that execute processing corresponding to the first layer.

The LLC processing unit 110 adds, for example, a destination service access point (DSAP) header, a source service access point (SSAP) header, and the like to the data received from the network 40 to generate an LLC packet. Then, the LLC processing unit 110 inputs the generated LLC packet to the data processing unit 120. In addition, the LLC processing unit 110 extracts data from the LLC packet input from the data processing unit 120. Then, the LLC processing unit 110 transmits the extracted data to the network 40.

The data processing unit 120 adds a MAC header to the LLC packet input from the LLC processing unit 110 to generate a MAC frame. Then, the data processing unit 120 inputs the generated MAC frame to the MAC frame processing unit 140. In addition, the data processing unit 120 extracts the LLC packet from the MAC frame input from the MAC frame processing unit 140. Then, the data processing unit 120 inputs the extracted LLC packet to the LLC processing unit 110. Hereinafter, the MAC frame including data is also referred to as a "data frame".

The management unit 130 controls establishment of a wireless connection (wireless link) between the sharing AP 10 and the non-AP MLD of the terminal 30 in a multi-AP connection. For example, the management unit 130 performs multi-AP association processing in response to a multi-AP association request from the terminal 30. The multi-AP association processing in the embodiment is association processing for establishing all the wireless links that can be established between the shared APs 20-1, 20-2, and 20-3 and the terminal 30 constituting the communication system 1. For example, in a case where the terminal 30 has two STAs as illustrated in Fig. 1, association processing for establishing the wireless link between the shared AP 20-1 and the STA 1, the wireless link between the shared AP 20-1 and the STA 2, the wireless link between the shared AP 20-2 and the STA 1, the wireless link between the shared AP 20-2 and the STA 2, the wireless link between the shared AP 20-3 and the STA 1, and the wireless link between the shared AP 20-3 and the STA 2 is performed. At the time of actual data exchange, in the sharing AP 10, any of the established wireless links is enabled as the wireless link for data exchange with the terminal 30, and the other wireless links are disabled. Further, the management unit 130 performs control such that instantaneous interruption does not occur in physical wireless connection (data exchange) between the shared AP 20 and the affiliated STA of the terminal 30 in the multi-AP connection. For example, the management unit 130 executes handover processing in response to a handover request from the terminal 30. In addition, the management unit 130 stores multi-AP management information 131 and terminal management information 132.

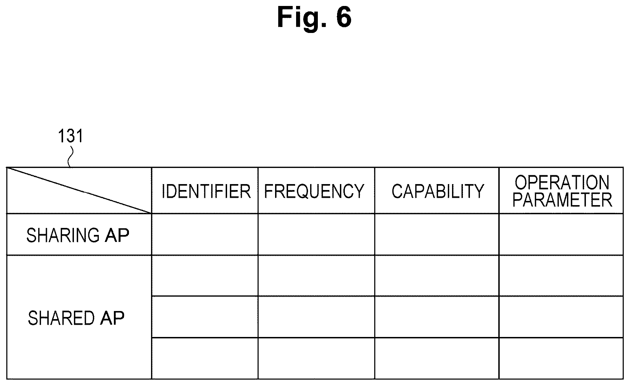

Fig. 6 is a table illustrating an example of a data structure of the multi-AP management information stored in the sharing AP according to the embodiment. As illustrated in Fig. 6, the multi-AP management information 131 stores information regarding the access points (that is, the sharing AP 10 and the shared APs 20-1, 20-2, and 20-3) used for the multi-AP connection. The information regarding the access points used for the multi-AP connection specifically includes, for example, an identifier, a frequency band, capability information, and operation parameters.

The identifier is, for example, an identifier of a corresponding AP. For the purposes of the following description, it is assumed that the identifier of the shared AP 20-1 is a shared AP #1, the identifier of the shared AP 20-2 is a shared AP #2, and the identifier of the shared AP 20-3 is a shared AP #3. Here, the identifier may include a MAC address.

The frequency band includes information indicating a frequency band used by the corresponding AP in the multi-AP connection. As the frequency band, for example, a 2.4 GHz band, a 5 GHz band, a 6 GHz band, a 45 GHz band, a 60 GHz band, or the like can be applied. Each frequency band may include a plurality of channels. In this case, the multi-AP management information 131 may include information of the channels instead of or in addition to the information of the frequency band.

The capability information includes, for example, information indicating whether or not the multi-AP connection method is supported. In the example of the embodiment, the capability information of any of the sharing AP 10, the shared AP 20-1, the shared AP 20-2, and the shared AP 20-3 is information indicating that the multi-AP connection method is supported.

The operation parameters include, for example, CWmin, CWmax, an arbitration interframe space (AIFS), and a transmission opportunity (TXOP) Limit. CWmin and CWmax indicate a minimum value and a maximum value of a contention window, respectively. The contention window is a parameter used to calculate backoff that is a transmission wait time for collision avoidance. AIFS is a fixed transmission wait time set for each traffic access category. The access category of the traffic includes, for example, "voice (VO)", "video (VI)", "best effort (BE)", "background (BK)", and "low latency (LL)". TXOP Limit indicates an upper limit value of a channel occupancy period TXOP.

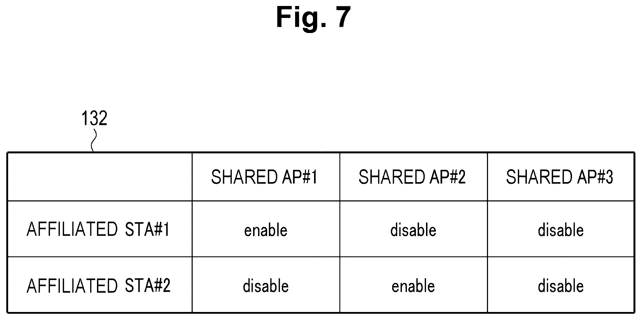

Fig. 7 is a table illustrating an example of a data structure of the terminal management information stored in the sharing AP according to the embodiment. As illustrated in Fig. 7, the terminal management information 132 includes information indicating states of the wireless links between the shared AP 20-1, the shared AP 20-2, and the shared AP 20-3 and the affiliated STA 1 and the affiliated STA 2 of the terminal 30 used for the multi-AP connection. Enable in Fig. 7 illustrates a state of enabling data exchange by using the wireless link between the shared AP and the affiliated STA of the corresponding identifiers. Disable in Fig. 7 illustrates a state of disabling data exchange by using the wireless link between the shared AP and the affiliated STA of the corresponding identifiers.

The functional configuration of the sharing AP 10 will be described with reference to Fig. 5 again. In a case where the MAC frame is input from the data processing unit 120 or the management unit 130, the MAC frame processing unit 140 inputs the input MAC frame to any one of the wireless signal processing units 150, 160, 170, and 180. Specifically, in a case where the MAC frame is a data frame, the MAC frame processing unit 140 inputs the MAC frame to the wireless signal processing units 150, 160, and 170. In a case where the MAC frame is a beacon frame, the MAC frame processing unit 140 inputs the MAC frame to the wireless signal processing unit 180. Further, in a case where the MAC frame is input from the wireless signal processing units 150, 160, 170, and 180, the MAC frame processing unit 140 inputs the MAC frame to the data processing unit 120 or the management unit 130 according to the type of the MAC frame. Specifically, in a case where the MAC frame is a data frame, the MAC frame processing unit 140 inputs the MAC frame to the data processing unit 120. In a case where the MAC frame is a management frame or a control frame, the MAC frame processing unit 140 inputs the MAC frame to the management unit 130.

Each of the wireless signal processing units 150, 160, 170, and 180 adds a preamble and the like to the MAC frame input from the MAC frame processing unit 140 to generate a wireless frame. Each of the wireless signal processing units 150, 160, 170, and 180 converts the generated wireless frame into a wireless signal. Then, each of the wireless signal processing units 150, 160, 170, and 180 radiates (transmits) the converted wireless signal via an antenna. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, each of the wireless signal processing units 150, 160, 170, and 180 converts the wireless signal from the corresponding shared AP 20 received via an antenna into the wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the wireless signal processing units 150, 160, 170, and 180 extracts the MAC frame from the converted wireless frame. Then, each of the wireless signal processing units 150, 160, 170, and 180 inputs the extracted MAC frame to the MAC frame processing unit 140. Here, in the embodiment, the wireless signal processing units 150, 160, 170, and 180 are configured to transmit and receive wireless signals using frequency bands or channels different from one another. For example, the wireless signal processing units 150, 160, and 170 are used to individually transmit the wireless signals to the corresponding shared APs. Further, for example, the wireless signal processing unit 180 is used to transmit the wireless signals including the same information to the plurality of shared APs. The function of the wireless signal processing unit 180 may be implemented by any of the wireless signal processing units 150, 160, and 170.

Prior to start of the multi-AP connection, the management unit 130 transmits a wireless signal including management information generated on the basis of the multi-AP management information 131 to the shared APs 20-1, 20-2, and 20-3 belonging to the sharing AP 10 using the wireless signal processing unit 180. In addition, at the time of the association processing, the management unit 130 transmits an association notification based on the multi-AP management information 131 and the terminal management information 132 to the shared APs 20-1, 20-2, and 20-3 belonging to the sharing AP 10 using the wireless signal processing units 150, 160, and 170.

After the multi-AP connection, the MAC frame processing unit 140 distributes the LLC packet input from the data processing unit 120 to any one of the shared APs 20-1, 20-2, and 20-3 belonging to the sharing AP 10. For example, the MAC frame processing unit 140 uses the wireless signal processing unit to transmit the wireless signal to the shared AP 20 wirelessly connected to the terminal 30 among the shared APs 20-1, 20-2, and 20-3 belonging to the sharing AP 10. The MAC frame processing unit 140 may determine the shared AP 20 as a transmission destination of the wireless signal according to a traffic identifier (TID) associated with the access category. In addition, at the time of the handover processing, the MAC frame processing unit 140 transmits information used to control the handover processing to the shared APs 20-1, 20-2, and 20-3 belonging to the sharing AP 10, using the wireless signal processing unit.

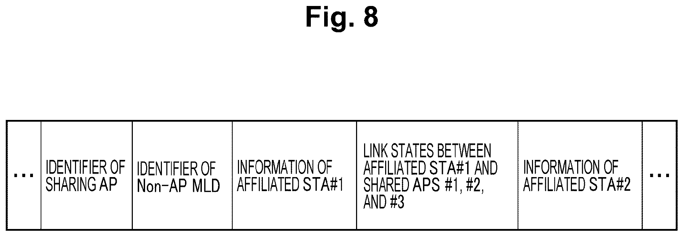

Fig. 8 is a diagram illustrating an example of the association notification generated in the sharing AP 10. The transmission of the association notification may be performed by broadcast or multicast. As illustrated in Fig. 8, the association notification as an example includes an identifier of the sharing AP, an identifier of the non-AP MLD, information of each of the affiliated STAs, and information of the link state between each affiliated STA and each shared AP.

The identifier of the sharing AP is an identifier of the sharing AP managed in the multi-AP management information 131.

The identifier of the non-AP MLD is an identifier of the non-AP MLD of the terminal 30 whose wireless link has been established with the shared AP of the corresponding identifier.

The information of the affiliated STA is information of the affiliated STAs #1 and #2 subordinate to the corresponding non-AP MLD. The information of the affiliated STA includes an identifier, a frequency band, capability information, and operation parameters managed in the multi-AP management information 131.

The information of the link state between each affiliated STA and each shared AP is information of enable or disable of the corresponding wireless link managed in the terminal management information 132. In the association notification, the state of the identifier of the shared AP to be enabled is enabled for each affiliated STA of each identifier, and the rest is disabled.

### 1.1.3.2 Functional Configuration of Shared AP

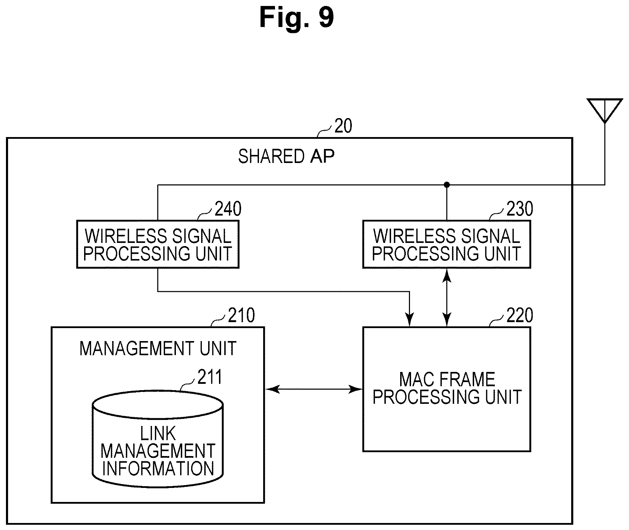

Fig. 9 is a block diagram illustrating an example of a functional configuration of the shared AP according to the embodiment. The shared AP 20 functions as a computer including a management unit 210, a MAC frame processing unit 220, and wireless signal processing units 230 and 240. The management unit 210 and the MAC frame processing unit 220 are functional blocks that execute processing corresponding to the MAC sublayer of the second layer. The wireless signal processing units 230 and 240 are functional blocks that execute processing corresponding to the first layer.

Prior to the multi-AP connection, the management unit 210 generates a beacon frame including information regarding the multi-AP connection on the basis of the management information received from the sharing AP. The management unit 210 informs the terminal 30 of the generated beacon frame via the wireless signal processing unit 230.

Further, the management unit 210 manages a physical wireless connection state between the shared AP 20 and the affiliated STA of the terminal 30 in the multi-AP connection. The management unit 210 stores link management information 211 as management information regarding the physical wireless connection of the multi-AP connection. Further, the management unit 210 may further store the multi-AP management information 131 transmitted from the sharing AP 10.

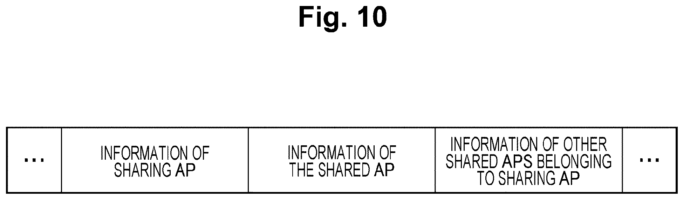

Fig. 10 is a diagram illustrating an example of the beacon frame generated in the shared AP 20. As illustrated in Fig. 10, the beacon frame as an example includes information of the sharing AP, information of the shared AP of an own station, and information of the shared AP of other station included in the multi-AP connection. The transmission of the beacon frame may be performed by broadcast or multicast.

The information of the sharing AP is information of the sharing AP included in the multi-AP connection. The information of the sharing AP includes the identifier of the sharing AP. The identifier of the sharing AP may include the MAC address of the sharing AP.

The information of the shared AP of the own station includes the identifier, the frequency band, the capability information, and the operation parameters of the local station. The identifier of the shared AP of the local station may include the MAC address of the shared AP of the local station.

The information of the other shared APs includes the identifier, the frequency band, the capability information, and the operation parameters of each of the other stations included in the multi-AP connection. The identifier of the shared AP of another station may include the MAC address of the shared AP of the other station.

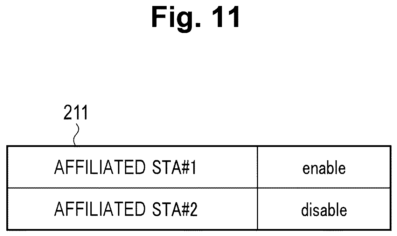

Fig. 11 is a table illustrating an example of a data structure of the link management information stored in the shared AP according to the embodiment. As illustrated in Fig. 11, the link management information 211 includes information indicating states of the wireless links with the affiliated STA 1 and the affiliated STA 2 of the terminal 30 connected to the own station. Enable in Fig. 11 illustrates a state of performing data exchange by using the wireless link with the affiliated STA of the corresponding identifier. Disable in Fig. 11 illustrates a state of not performing data exchange by using the wireless link between the shared AP and the affiliated STA of the corresponding identifiers. Note that the disabled wireless link is also the wireless link that has already been established.

The functional configuration of the shared AP 20 will be described with reference to Fig. 9 again. The MAC frame processing unit 220 extracts the MAC frame from the wireless signal received from the sharing AP 10 via the wireless signal processing unit 240, and inputs the extracted MAC frame to the wireless signal processing unit 230. Further, the MAC frame processing unit 220 extracts the MAC frame from the wireless signal received from the terminal 30 via the wireless signal processing unit 230, and inputs the extracted MAC frame to the wireless signal processing unit 240.

Each of the wireless signal processing units 230 and 240 adds a preamble and the like to the MAC frame input from the MAC frame processing unit 220 to generate a wireless frame. Each of the wireless signal processing units 230 and 240 converts the generated wireless frame into a wireless signal. Then, each of the wireless signal processing units 230 and 240 radiates (transmits) the converted wireless signal via an antenna. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, each of the wireless signal processing units 230 and 240 converts the wireless signal from the corresponding shared AP 20 received via an antenna into the wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the wireless signal processing units 230 and 240 extracts the MAC frame from the converted wireless frame. Then, each of the wireless signal processing units 230 and 240 inputs the extracted MAC frame to the MAC frame processing unit 220. Here, in the embodiment, the wireless signal processing units 230 and 240 are configured to transmit and receive the wireless signals using frequency bands or channels different from each other. For example, the wireless signal processing unit 230 is configured to transmit and receive the wireless signal using the same frequency band or channel as the affiliated STA 1 of the terminal 30. Further, the wireless signal processing unit 240 is configured to transmit and receive the wireless signal using the same frequency band or channel as the wireless signal processing unit 180 of the sharing AP 10. For example, the wireless signal processing unit 230 is used to exchange the data frame with the terminal 30. Further, for example, the wireless signal processing unit 240 is used to receive a broadcast or multicast signal from the sharing AP 10 and a broadcast or multicast signal to the terminal 30. The function of the wireless signal processing unit 230 and the function of the wireless signal processing unit 240 may be implemented in one wireless signal processing unit.

### 1.1.3.3 Functional Configuration of Terminal

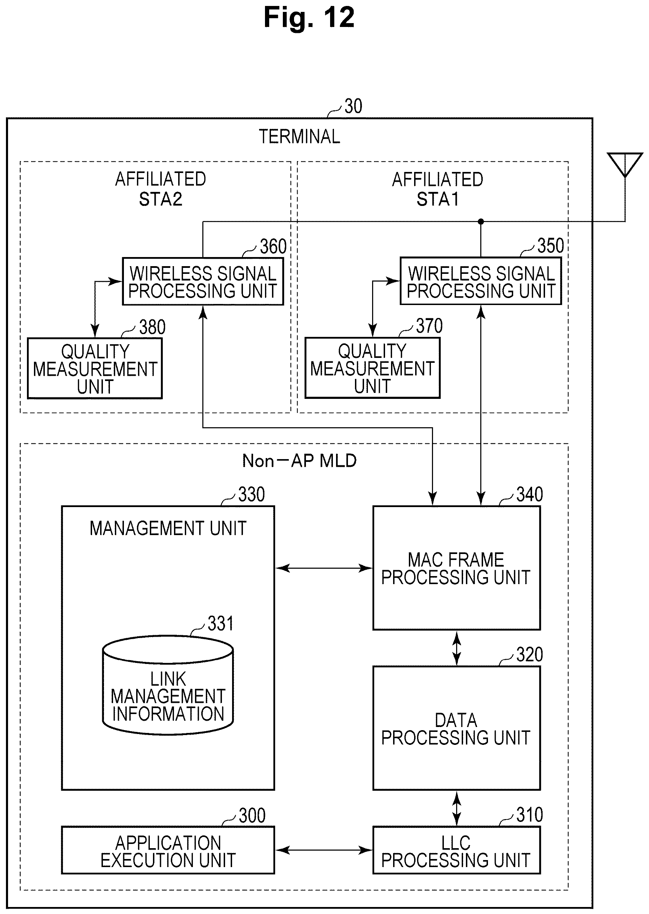

Fig. 12 is a block diagram illustrating an example of a functional configuration of the terminal according to the embodiment. The terminal 30 functions as a computer including an application execution unit 300, an LLC processing unit 310, a data processing unit 320, a management unit 330, a MAC frame processing unit 340, wireless signal processing units 350 and 360, and quality measurement units 370 and 380. The application execution unit 300 is a functional block that executes processing corresponding to the seventh layer. The LLC processing unit 310 is a functional block that executes processing corresponding to the LLC sublayer of the second layer and the third layer to the sixth layer. The data processing unit 320, the management unit 330, and the MAC frame processing unit 340 are functional blocks that perform processing corresponding to the MAC sublayer of the second layer. The wireless signal processing units 350 and 360 and the quality measurement units 370 and 380 are functional blocks that execute processing corresponding to the MAC sublayer of the second layer and the first layer.

The application execution unit 300 executes an application on the basis of data input from the LLC processing unit 310. In addition, the application execution unit 300 inputs data to the LLC processing unit 310. For example, the application execution unit 300 can display application information on the display 35. Further, the application execution unit 300 can operate on the basis of operation of an input interface.

The LLC processing unit 310 adds a DSAP header, an SSAP header, and the like to the data input from the application execution unit 300 to generate an LLC packet. Then, the LLC processing unit 310 inputs the generated LLC packet to the data processing unit 320. In addition, the LLC processing unit 310 extracts data from the LLC packet input from the data processing unit 320. Then, the LLC processing unit 310 inputs the extracted data to the application execution unit 300.

The data processing unit 320 inputs the LLC packet input from the LLC processing unit 310 to the MAC frame processing unit 340. In addition, the data processing unit 320 inputs the LLC packet input from the MAC frame processing unit 340 to the LLC processing unit 310.

The management unit 330 controls the logical wireless connection between the sharing AP 10 and the non-AP MLD of the terminal 30 in the multi-AP connection. For example, the management unit 330 generates the association request on the basis of the multi-AP management information included in the beacon frame from the shared AP 20. Further, the management unit 330 generates the handover request on the basis of a measurement results of the quality of the wireless link by the quality measurement units 370 and 380 so that instantaneous interruption does not occur in the physical wireless connection between the shared AP 20 and the affiliated STA of the terminal 30 in the multi-AP connection. Further, the management unit 330 stores link management information 331.

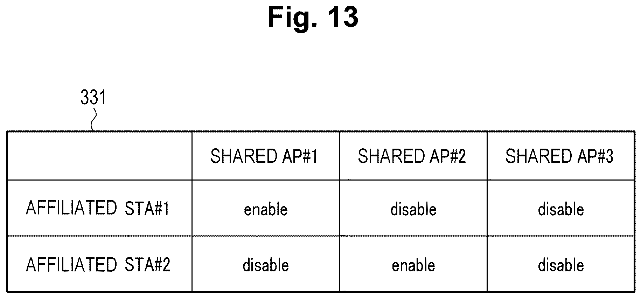

Fig. 13 is a table illustrating an example of a data structure of the link management information stored in the terminal according to the embodiment. As illustrated in Fig. 13, the link management information 331 is information equivalent to the terminal management information 132 illustrated in Fig. 7. That is, the link management information 331 includes information indicating states of the wireless links between the shared AP 20-1, the shared AP 20-2, and the shared AP 20-3 and the affiliated STA 1 and the affiliated STA 2 of the terminal 30 used for the multi-AP connection.

The functional configuration of the terminal 30 will be described with reference to Fig. 12 again. The MAC frame processing unit 340 adds a MAC header to the LLC packet received from the data processing unit 320 to generate a MAC frame. Then, the MAC frame processing unit 340 distributes the generated MAC frame to the wireless signal processing units 350 and 360. Further, the MAC frame processing unit 340 inputs the MAC frames input from the wireless signal processing units 350 and 360 to the data processing unit 320.

The data processing unit 320, the management unit 330, and the MAC frame processing unit 340 correspond to the non-AP MLD. Meanwhile, the wireless signal processing unit 350 and the quality measurement unit 370 correspond to the affiliated STA 1. The wireless signal processing unit 360 and the quality measurement unit 380 correspond to the affiliated STA 2. The wireless signal processing unit 350 and the quality measurement unit 370 have functional configurations equivalent to those of the wireless signal processing unit 360 and the quality measurement unit 380, respectively.

Each of the wireless signal processing units 350 and 360 adds a preamble and the like to the MAC frame input from the MAC frame processing unit 340 to generate a wireless frame. Each of the wireless signal processing units 350 and 360 converts the generated wireless frame into a wireless signal. Then, each of the wireless signal processing units 350 and 360 radiates (transmits) the converted wireless signal via an antenna. The conversion processing from the wireless frame to the wireless signal includes, for example, convolutional encoding processing, interleave processing, subcarrier modulation processing, inverse fast Fourier transform processing, OFDM modulation processing, and frequency conversion processing. In addition, each of the wireless signal processing units 350 and 360 converts the wireless signal from the corresponding shared AP 20 received via an antenna into the wireless frame. The conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the wireless signal processing units 350 and 360 extracts the MAC frame from the converted wireless frame. Then, each of the wireless signal processing units 350 and 360 inputs the extracted MAC frame to the MAC frame processing unit 340.

The quality measurement units 370 and 380 measure the quality of the respective wireless links to which the wireless signal processing units 350 and 360 are connected. The quality of the wireless link is evaluated by, for example, measuring reception power or the like. Each of the quality measurement units 370 and 380 inputs a measurement result of the quality to the management unit 330.

### 1.2 Operation

### 1.2.1 Communication Sequence

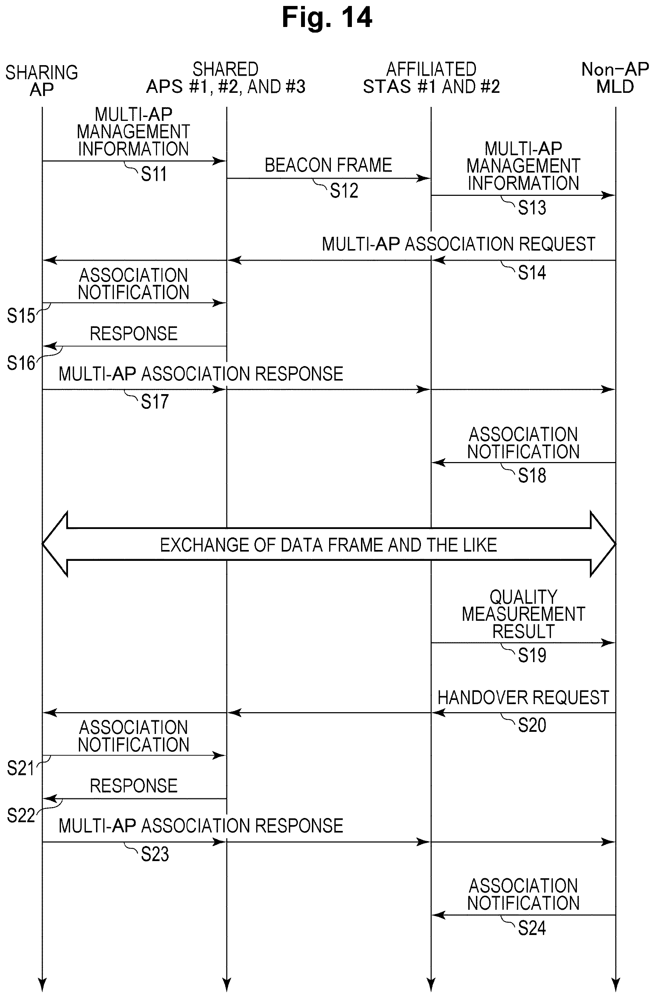

Next, an operation in the communication system according to the embodiment will be described. Fig. 14 is a sequence diagram illustrating an example of processing of communication based on the multi-AP connection in the communication system according to the embodiment.

Fig. 14 illustrates a flow of information exchanged among the sharing AP, the shared APs #1, #2, and #3, the affiliated STA #1 and the affiliated STA #2, and the non-AP MLD.

The sharing AP transmits the multi-AP management information 131 to each of the shared APs #1, #2, and #3 by broadcast or multicast (S11). Since the shared APs #1, #2, and #3 are installed in the communicable area of the sharing AP, the shared APs #1, #2, and #3 can receive the multi-AP management information 131 transmitted by broadcast or multicast.

Each of the shared APs #1, #2, and #3 generates the beacon frame on the basis of the received multi-AP management information 131. Then, each of the shared APs #1, #2, and #3 transmits the generated beacon frame by broadcast or multicast (S12). The terminal can receive the beacon if the terminal is located in any of the communicable areas of the shared APs #1, #2, and #3.

Each of the affiliated STA 1 and the affiliated STA 2 of the terminal inputs information included in the beacon frame to the non-AP MLD (S13).

The non-AP MLD generates the multi-AP association request for performing the multi-AP connection on the basis of the input information, and transmits the generated multi-AP association request to the sharing AP (S14). The association request includes, for example, information of the identifier of the shared AP to which each of the affiliated STA #1 and the affiliated STA #2 desires connection in the multi-AP connection. The multi-AP association request may be transmitted from at least one of the affiliated STA #1 or the affiliated STA #2. That is, the multi-AP association request may be transmitted from only one or both of the affiliated STAs #1 and #2. The multi-AP association request transmitted from the affiliated STA is transmitted to the sharing AP via the shared AP to which the frequency band or the channel corresponds.

The sharing AP generates the association notification on the basis of the association request. Then, the sharing AP transmits the generated association notification to each of the shared APs #1, #2, and #3 by broadcast or multicast (S15). As described above, the association notification includes the identifiers of all the affiliated STAs subordinate to the non-MLD, which are targeted for establishing the wireless links. Further, the association notification includes information for notifying which wireless link between the shared AP and the affiliated STA is to be enabled. For example, in a case where the wireless link between the shared AP #1 and the affiliated STA #1 is enabled, the sharing AP enables the link state between the affiliated STA #1 and the shared AP #1, and disables the link state between the affiliated STA #1 and the shared AP #2 and the link state between the affiliated STA #1 and the shared AP #3 in the information of the link states between the affiliated STA #1 and the shared APs #1, #2, and #3 in the association notification.

When receiving the association notification, the shared APs #1, #2, and #3 register the identifiers of the affiliated STAs #1 and #2 as connection partners of the wireless links in the terminal 30 as the link management information 211. In addition, the shared APs #1, #2, and #3 register the frequency band, the capability information, the operation parameters, and the like as the information of the affiliated STAs #1 and #2. Further, the shared APs #1, #2, and #3 register enable and disable information of each link state in the link management information 211. Thereafter, a response for notifying the sharing AP that the association notification has been received is returned (S16). As a result, preparation in the shared AP for data exchange using the enabled wireless link is completed. The shared AP enabled in the association notification is set to be able to mediate exchange of the data frame between the sharing AP and the terminal.

In addition, the sharing AP generates the association response to the association request from the non-AP MLD. Then, the sharing AP 10 transmits the generated association response to the non-AP MLD (S17). The association response is transmitted to the non-AP MLD via at least one of the shared APs #1, #2, or #3 and at least one of the affiliated STA #1 or the affiliated STA #2.

The non-AP MLD registers the identifiers of the shared APs #1, #2, and #3 constituting the wireless links as the link management information 331 on the basis of the association response. Further, the non-AP MLD registers the enable and disable information of the link state of each link between each shared AP and each affiliated STA in the link management information 331. Thereafter, the non-AP MLD generates the association notification. Then, the non-AP MLD inputs the generated association notification to each of the affiliated STA #1 and the affiliated STA #2 (S18). The association notification includes information of the shared AP whose wireless link has been established with each of the affiliated STAs and information indicating whether to enable or disable the wireless link using the corresponding affiliated STA. With the association notification to each of the affiliated STAs, preparation in the terminal for data exchange using the enabled wireless link is completed.

As described above, the association processing for establishing the wireless link by the multi-AP connection between the sharing AP and the non-AP MLD is completed. After the association processing is completed, the wireless link via the shared AP #1, the wireless link via the shared AP #2, and the wireless link via the shared AP #3 are established between the sharing AP and the non-AP MLD. Then, the data exchange using the wireless link including the shared AP enabled by the association notification and the corresponding affiliated STA becomes executable.

After the establishment of the wireless link, each of the affiliated STAs #1 and #2 inputs a quality measurement result (for example, reception power) of the wireless link received by the wireless link that the each affiliated STA is connected to the non-AP MLD (S19).

The non-AP MLD performs determination processing for determining whether or not handover is necessary on the basis of the quality measurement results input from the subordinate affiliated STAs #1 and #2, and transmits the handover request to the sharing AP as necessary (S20). Details of the determination processing will be described below. The handover request includes, for example, the identifier of the affiliated STA that desires handover and the identifier of the shared AP to which the affiliated STA that desires handover newly desires connection. The handover request is transmitted to the sharing AP via at least one affiliated STA of the affiliated STA #1 or the affiliated STA #2 and at least one shared AP of the shared AP #1, #2, or #3.

The sharing AP generates the association notification on the basis of the handover request. Then, the sharing AP transmits the generated association notification to each of the shared APs #1, #2, and #3 by broadcast or multicast (S21). The association notification includes information for notifying which wireless link between the sharing AP and the affiliated STA is to be enabled among the wireless links between the sharing AP and the non-AP MLD. Which wireless link is to be enabled is determined by the identifier of the shared AP to which the affiliated STA that desires handover newly desires connection. For example, when the identifier of the affiliated STA that desires handover is the affiliated STA #1 and the identifier of the shared AP to which the affiliated STA #1 newly desires connection is the shared AP #3, the sharing AP enables the link state between the affiliated STA #1 and the shared AP #3 and disables the link state between the affiliated STA #1 and the shared AP #1 and the link state between the affiliated STA #1 and the shared AP #2 in the information of the link states between the affiliated STA #1 and the shared APs #1, #2, and #3 in the association notification.

When receiving the association notification, the shared APs #1, #2, and #3 return the response for notifying the sharing AP that the association notification has been received (S22). As a result, preparation in the shared AP for data exchange using the enabled wireless link is completed.

Further, the sharing AP generates the association response to the handover request from the non-AP MLD.

Then, the sharing AP 10 transmits the generated association response to the non-AP MLD (S23). The association response is transmitted to the non-AP MLD via at least one of the shared APs #1, #2, or #3 and at least one of the affiliated STA #1 or the affiliated STA #2.

The non-AP MLD generates the association notification on the basis of the association response. Then, the non-AP MLD inputs the generated association notification to each of the affiliated STA #1 and the affiliated STA #2 (S24). The association notification includes the information indicating whether to enable or disable the wireless link using the corresponding affiliated STA. With the association notification to each of the affiliated STAs, preparation in the terminal for data exchange using the newly enabled wireless link is completed.

Thus, the handover processing is completed. That is, in the embodiment, the handover processing is completed only by switching between enable and disable of the wireless link and notification thereof.

Note that, in the above-described handover processing, the sharing AP 10 may include information indicating timing of switching the wireless link for executing data exchange in the handover notification and the handover response. The timing of switching the wireless link for executing the data exchange can be defined by, for example, the number of transmission times of the beacon frame or an elapsed time after the handover notification and the handover response notification, or the like. As a result, the shared APs 20-1 and 20-3 and the affiliated STA 1 can be timed in switching by the countdown method.

### 1.2.2 Determination Processing

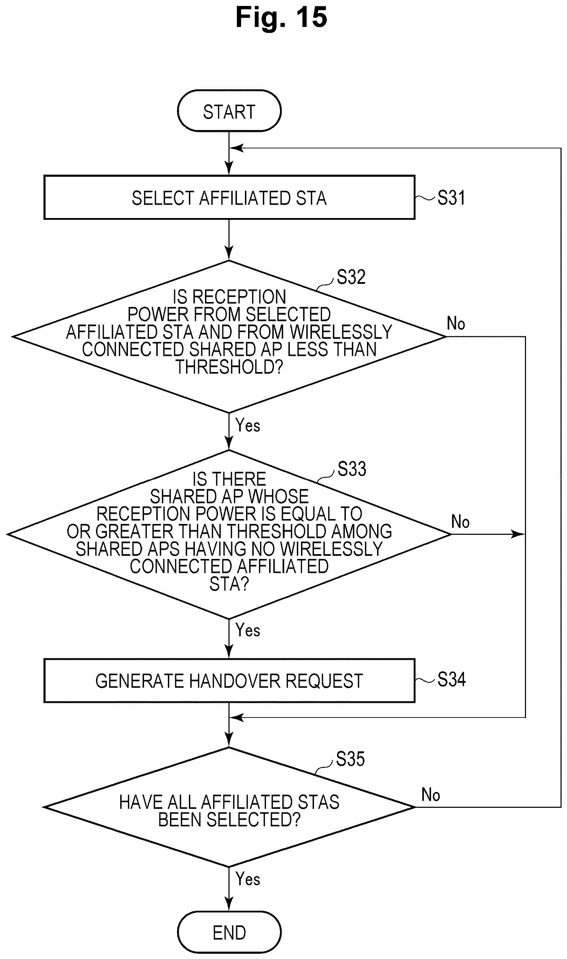

Fig. 15 is a flowchart illustrating an example of the determination processing subsequent to the association processing. Fig. 15 illustrates a case where the reception power is measured as an example of the quality measurement result.

When the measurement result of the reception power of the wireless signal received by each of the affiliated STA #1 and the affiliated #2 is input (start), the non-AP MLD selects the affiliated STA for which the determination processing is to be executed (S31).

The non-AP MLD determines whether or not the reception power from the shared AP to which the selected affiliated STA is connected is less than a threshold (S32).

In a case where the reception power from the connected shared AP is less than the threshold (S32; yes), the non-AP MLD determines whether or not there is a shared AP whose reception power is equal to or greater than the threshold among the shared APs having no affiliated STA connected thereto (S33).

In a case where there is a shared AP whose reception power is equal to or greater than the threshold among the shared APs having no affiliated STA connected thereto (S33; yes), the non-AP MLD generates the handover request (S34). As described above, the handover request includes, for example, the identifier of the affiliated STA that desires handover and the identifier of the shared AP to which the affiliated STA that desires handover newly desires connection. The identifier of the affiliated STA that desires handover is the identifier of the affiliated STA selected in the processing of S31. The identifier of the shared AP to which the affiliated STA that desires handover newly desires connection is the identifier of the shared AP included in the wireless link whose reception power is determined to be equal to or greater than the threshold in the processing of S33.

In a case where the reception power from the connected shared AP 20 is equal to or greater than the threshold after the processing of S34 (S32; no), or in a case where the reception power from the unconnected shared AP 20 is less than the threshold (S33; no), the non-AP MLD determines whether or not all the affiliated STAs have been selected (S35).

In a case where there is an unselected affiliated STA (S35; no), the non-AP MLD selects the unselected affiliated STA (S31). Thereafter, the subsequent processing of S32 to S35 is executed. In this manner, the processing of S31 to S35 is executed until all the affiliated STAs are selected.

In a case where all the affiliated STAs have been selected (S35; yes), the determination processing ends (end) .

### 1.3 Effects According to Embodiment

According to the embodiment, the sharing AP comprehensively establishes the wireless link via the shared AP #1, the wireless link via the shared AP #2, and the wireless link via the shared AP #3 with the non-AP MLD of the terminal. Specifically, the sharing AP transmits the association notification to each of the shared APs #1, #2, and #3, and returns the association response to the non-AP MLD of the terminal in response to the association request from the terminal. The non-AP MLD of the terminal inputs the association notification including the states of the wireless links to the affiliated STA #1 and the affiliated STA #2 on the basis of the association response. As a result, the non-AP MLD of the terminal can execute the association processing with the sharing AP without individually performing handshake with each of the shared APs #1, #2, and #3. A similar operation is also applied at the time of handover, so that the non-AP MLD of the terminal can switch the data exchange destination without individually performing handshake with each of the shared APs #1, #2, and #3. Therefore, it is possible to suppress occurrence of instantaneous interruption due to the handover processing, and to reduce a delay caused in the data exchange.

### 2. Modifications and the like

Note that various modifications can be applied to the above-described embodiment. For example, in the above-described embodiment, the function of the sharing AP and the function of the shared AP are completely divided. Actually, the sharing AP may have the function of the shared AP. For example, the sharing AP 10 may be installed at the position of the shared AP 20-1 illustrated in Fig. 1. In this case, the sharing AP 10 at the position of the shared AP 20-1 can communicate with both the other shared APs and the terminal 30 using the wireless signal processing units 150, 160, and 170 while managing the multi-AP management information 131 and the terminal management information 132 in the management unit 130. The wireless signal processing unit used for data exchange with the terminal 30 may be managed so as not to be used for communication with another sharing AP. In addition, transmission of comprehensive wireless signals to another sharing AP such as the association notification may be performed using the wireless signal processing unit 180 in a similar manner as described above.

Further, in the above-described embodiment, the number of shared APs included in each wireless link is one. In contrast, two or more shared APs may be included in each wireless link. That is, the multi-AP connection in the embodiment can also be applied to a multistage configuration in which two or more shared APs are interposed in the wireless link between the sharing AP and the terminal. In this case, two or more lower-level shared APs may be connected to the higher-level shared AP. The multistage configuration enables transmission of the multi-AP management information and the like to the shared AP installed outside the communicable area of the sharing AP.

Further, the association processing and the handover processing in the sharing AP 10, the shared APs 20, and the terminal 30 according to the above-described embodiment can be stored as a program that can be executed by a processor that is a computer. Further, the program can be stored in a storage medium of an external storage device such as a magnetic disk, an optical disc, or a semiconductor memory for distribution. Then, the processor of each of the sharing AP 10, the shared APs 20, and the terminal 30 reads the program stored in the storage medium of the external storage device, and the operation is controlled by the read program, whereby the association processing and the handover processing can be executed.

Note that the present invention is not limited to the foregoing embodiments and various modifications can be made in an implementation stage without departing from the gist of the invention. Further, the embodiments may be implemented in appropriate combination, and in this case, a combined effect can be obtained. Moreover, the above embodiments include various inventions, and various inventions can be extracted by a combination selected from the plurality of disclosed components. For example, in a case where the problems can be solved and the effects can be obtained even if some components are deleted from all the components described in the embodiment, a configuration from which the components are deleted can be extracted as an invention.

### Reference Signs List

1 Communication system
10 Sharing AP
11, 21, 31 CPU
12, 22, 32 ROM
13, 23, 33 RAM
14, 24, 34 Wireless communication module
15 Wired communication module
20, 20-1, 20-2, 20-3 Shared AP
30 Terminal
35 Display
36 Storage
40 Network
110, 310 LLC processing unit
120, 320 Data processing unit
130, 210, 330 Management unit
131 Multi-AP management information
132 Terminal management information
140, 220, 340 MAC frame processing unit
150, 160, 170, 180, 230, 240, 350, 360 Wireless signal processing unit
211, 331 Link management information
300 Application execution unit
370, 380 Quality measurement unit

## Claims

1. A terminal apparatus in a communication system including a sharing access point, a plurality of shared access points that wirelessly communicates with the sharing access point, and the terminal apparatus,
the terminal apparatus comprising:
a plurality of wireless signal processing units configured to transmit wireless signals using different channels, respectively; and
a control unit configured to control a connection destination of the plurality of wireless signal processing units, wherein
each of the wireless signal processing units establishes a wireless link with each of the shared access points, and
the control unit controls the connection destination of each of the wireless signal processing units by enabling up to one of wireless links with the respective shared access points and disabling the other wireless links, for each of the wireless signal processing units, on a basis of a notification from the sharing access point.

2. A sharing access point in a communication system including the sharing access point, a plurality of shared access points configured to wirelessly communicate with the sharing access point, and a terminal apparatus having a plurality of wireless signal processing units configured to transmit wireless signals using different channels, respectively,
the sharing access point comprising:
a control unit configured to
establish a wireless link between each of the shared access points and each of the wireless signal processing units on a basis of a request from the terminal apparatus; and
notify each of the shared access points and the terminal device to enable up to one of wireless links with the respective shared access points and disable the other wireless links, for each of the wireless signal processing units.

3. A shared access point in a communication system including a sharing access point, a plurality of shared access points that wirelessly communicates with the sharing access point, and a terminal apparatus having a plurality of wireless signal processing units configured to transmit wireless signals using different channels, respectively,
the shared access point comprising:
a control unit configured to
establish a wireless link with each of the wireless signal processing units on a basis of a notification from the sharing access point, and
switch between enable and disable of the wireless link with each of the wireless signal processing units on a basis of a notification from the sharing access point.

4. A communication method using a communication system including a sharing access point, a plurality of shared access points that wirelessly communicates with the sharing access point, and a terminal apparatus having a plurality of wireless signal processing units configured to transmit wireless signals using different channels, respectively, the communication method comprising:
establishing a wireless link between each of the shared access points and each of the wireless signal processing units on a basis of a request from the terminal apparatus to the sharing access point; and
enabling up to one of wireless links with the respective shared access points and disabling the other wireless links for each of the wireless signal processing units, on a basis of a notification from the sharing access point to each of the shared access points and the terminal apparatus.
